# EUROPEAN PATENT SPECIFICATION

(11) **EP 3 716 446 B1**
(45) Date of publication and mention of the grant of the patent: **21.08.2024**
(21) Application number: 19212091.3
(22) Date of filing: 28.11.2019
(51) Int. Cl.: H02K 3/18, H02K 1/24, H02K 3/20, H02K 3/28, H02K 15/095, H02K 15/04, H02K 19/16, H02K 19/26

(54) **ELECTRIC MACHINE HAVING A CORE WITH DISTRIBUTED POLES**
ELEKTRISCHE MASCHINE MIT EINEM KERN MIT VERTEILTEN POLEN
MACHINE ÉLECTRIQUE DOTÉE D'UN NOYAU À PÔLES DISTRIBUÉS

(30) Priority: 25.03.2019 US 201916363601
(43) Date of publication of application: 30.09.2020
(73) Proprietor: Hamilton Sundstrand Corporation, Charlotte, NC 28217-4578 (US)
(72) Inventor: COLDWATE, Joseph K., Roscoe, IL 61073 (US); KOENIG, Andreas C., Machesney Park, IL 61115 (US)
(74) Representative: Dehns

(56) References cited:
- JP-A- H04 285 454
- US-A- 4 575 652
- US-A1- 2005 253 675
- US-A1- 2015 061 448

## Description

### BACKGROUND

The subject matter disclosed herein generally relates to electric machines, and more particularly to electric machine cores having distributed poles.

Electrical systems, such as aircraft electrical systems, commonly include generators. The generators provide electrical power to electrical devices connected to the electrical systems, generally by rotating magnetic elements relative to a stationary winding. As the magnetic elements rotate magnetic flux is communicated between the magnetic elements and the stationary winding, the magnetic flux inducing current flow in the stationary winding for powering electrical devices connected to the generator.

In some generators the magnetic flux is provided by flowing an electric current through coils of wire wrapped about a ferromagnetic structure. The current flow magnetizes the portion of the ferromagnetic structure the wire wraps about to define a magnetic pole including the ferromagnetic structure. Once magnetized, the pole communicates magnetic flux to the stationary winding, the magnetic flux in turn inducing current flow in the stationary winding. Typically, the ferromagnetic structure about which the wire is coiled is a single, continuous ferromagnetic structure. In addition, the pole is generally formed using a single coil wrapped about the single ferromagnetic structure to impart both uniformity and symmetry to the pole.

Such generators and methods of making generators having generally been satisfactory for their intended purpose. However, there remains a need in the art for improved cores for electric machines, electric machines, and methods of defining poles in electric machines. The present disclosure provides a solution to this need. US 4,575,652 relates to a permanent magnet electric motor.

### BRIEF SUMMARY

According to the invention, an electric machine as defined in claim 1 is provided.

Further embodiments may include wherein in the core comprises a plurality of laminations axially stacked along the rotation axis, and further comprising a shaft arranged along the rotation axis, the core body seated on the shaft.

Further embodiments may include wherein the winding is one of a field winding, an excitation winding, or a control winding.

Further embodiments may include a damper winding seated in the core body.

Further embodiments may include wherein the core has no permanent magnets fixed to the core body.

Further to generate a sinusoidal voltage waveform for an alternating current electrical load connected to the stator winding.

Further embodiments may include that the winding and the rotor cooperate to generate a trapezoidal voltage waveform for a direct current electrical load connected to the stator winding.

Further embodiments may include one of an alternating current electrical load and a direct current electrical load connected to the stator winding.

Furthermore the invention provides, as defined in claim 8, a method of making a core for the electric machine defined in claim 1.

Technical effects of embodiments of the present disclosure include the capability to shape the magnetic poles defined within an electric machine. According to the invention, embedimenta shaping is accomplished by arrangement of a coil circumferentially about two or more teeth the electric machine core. In accordance with the invention shaping is accomplished by forming the teeth such that one of two circumferentially adjacent teeth has a greater pole arc than another of the two circumferentially adjacent teeth, and the coil wrapped about both the two circumferential teeth. Further according to the invention the shaping is accomplished by wrapping two or more coils about the teeth defining the magnetic pole such that one of the two or more coils has a greater number of turns than another of the two or more coils. In addition, technical effects include the capability to provide relatively large pole arc in relation to coil and wedge size.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF DRAWINGS

The following descriptions should not be considered limiting in any way. With reference to the accompanying drawings, like elements are numbered alike:
FIG. 1 is a schematic view of an electrical system having a generator-type electric machine constructed in accordance with the present disclosure, showing the generator providing current power to electrical loads using a sinusoidal voltage waveform or a trapezoidal voltage waveform defined by distributed poles of the generator core;
FIG. 2 is a cross-sectional axial view of a core of the generator of FIG. 1, showing a core body arranged along a rotation axis with teeth and a winding formed from a plurality of coils wrapped about the teeth;
FIG. 3 is a schematic view of a core for the generator shown in FIG. 1 according to a comparative example not belonging to the invention, showing distributed poles of the core cooperatively defined by teeth having equivalent circumferential span and coils with equivalent numbers of turns;
FIG. 4 is a schematic view of a core for the generator shown in FIG. 1 according to a further comparative example not belonging to the invention, showing distributed poles of the core defined by teeth having different circumferential spans;
FIG. 5 is schematic view of a core for the generator shown in FIG. 1 according to an embodiment of the invention, showing distributed poles of the core defined by coils having different numbers of turns;
FIG. 6 is a cross-sectional axial view of a core for the generator shown in FIG. 1, showing a core having twelve (12) distributed poles defined by twenty-four (24) winding coils and twenty-four (24) core teeth, according to an embodiment; and
FIG. 7 is a block diagram of a method of making a core for an electric machine, showing operations of the method.

### DETAILED DESCRIPTION

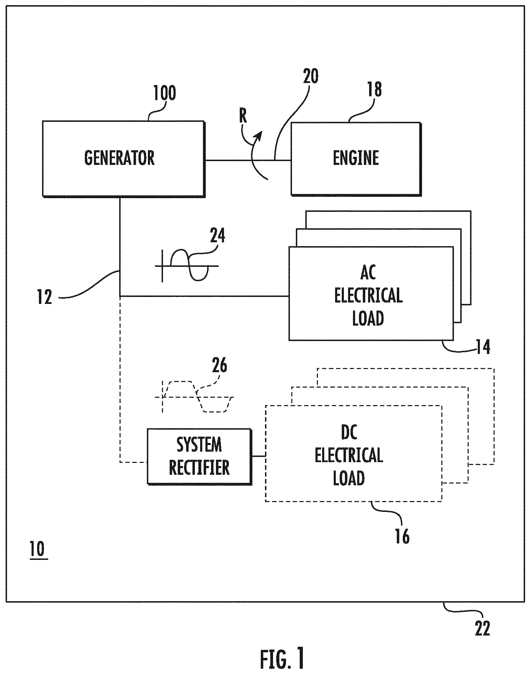

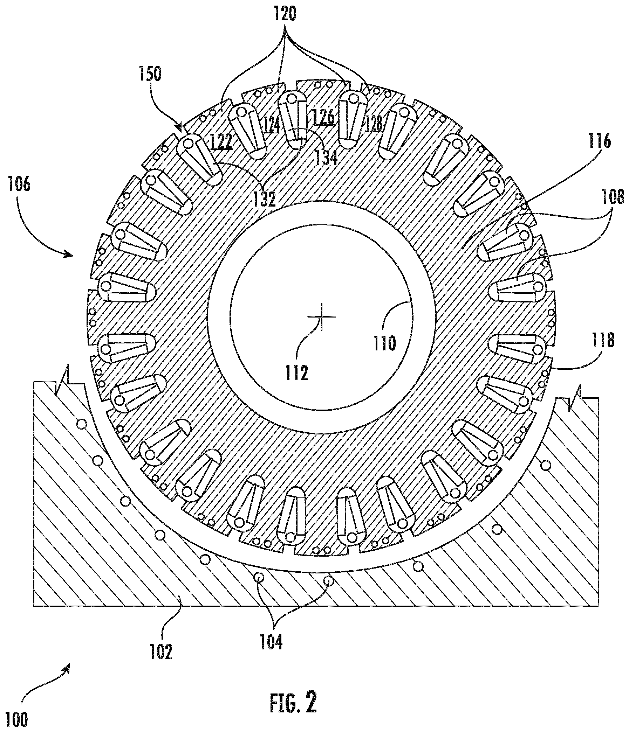

Reference will now be made to the drawings wherein like reference numerals identify similar structural features or aspects of the subject disclosure. For purposes of explanation and illustration, and not limitation, a partial view of an exemplary embodiment an electric machine in accordance with the present disclosure is shown in FIG. 1 and is designated generally by reference character 100. Other embodiments of cores for electric machines, electric machines, and methods of making cores for electric machines in accordance with the present disclosure, or aspects thereof, are provided in FIGS. 2-7, as will be described. The systems and methods described herein can be used for generator-type electric machines in aircraft electrical systems, though the present disclosure is not limited to aircraft electric systems or to any particular type of electric machine in general.

Referring to FIG. 1, an electrical system 10 is shown. The electrical system, 10 includes the generator-type electric machine (generator) 100, a power distribution bus 12, and one or more electrical load, e.g., an alternating current (AC) electrical load 14 or a direct current (DC) electrical load 16, which is connected to the electric machine 100. The electric machine 100 is operatively associated with an engine 18 and receives mechanical rotation R from the engine 18 to generate electric power, e.g., AC power with a sinusoidal voltage waveform 24 for the AC electrical load 14 or DC power with a trapezoidal voltage waveform 26 for the DC electrical load 16. As shown in FIG. 1 the electrical system 10 is an aircraft electrical system and the engine 18 is an aircraft main engine or auxiliary power unit connected to the generator-type electric machine 100 by an accessory gearbox 20 carried by an aircraft 22. Although shown and described herein in the context of an aircraft electrical system, it is to be understood and appreciated that other types of electrical systems, e.g., terrestrial vehicles and fixed electrical systems, and electric machines, e.g., motors, can also benefit from the present disclosure.

With reference to FIG. 2, the electric machine 100 is shown. The electric machine 100 includes a stator 102 with a stator winding 104, a core 106 with a core winding 108, and shaft 110. The stator 102 extends about a rotation axis 112 and supports the stator winding 104. The stator winding 104 is in electrical communication with power distribution bus 12 (shown in FIG. 1). The shaft 110 is supported for rotation about the rotation axis 112 relative to the stator 102. The core 106 includes a core body 114 and is seated on the shaft 110.

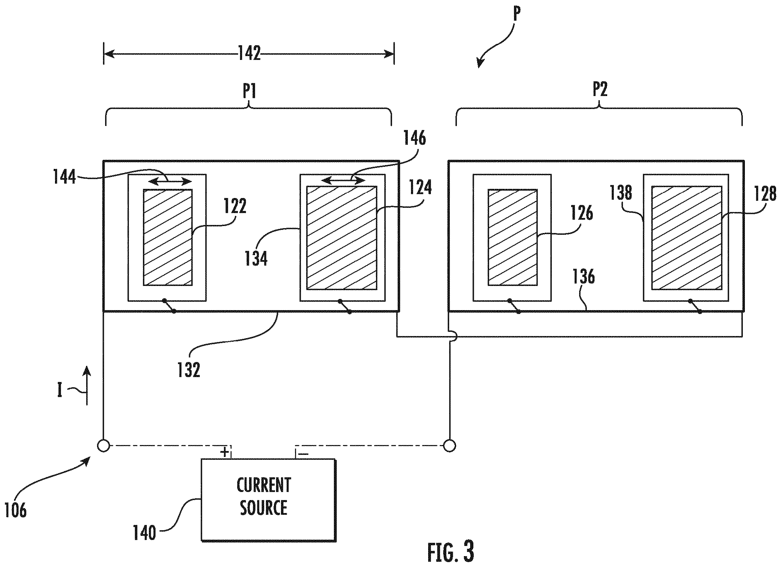

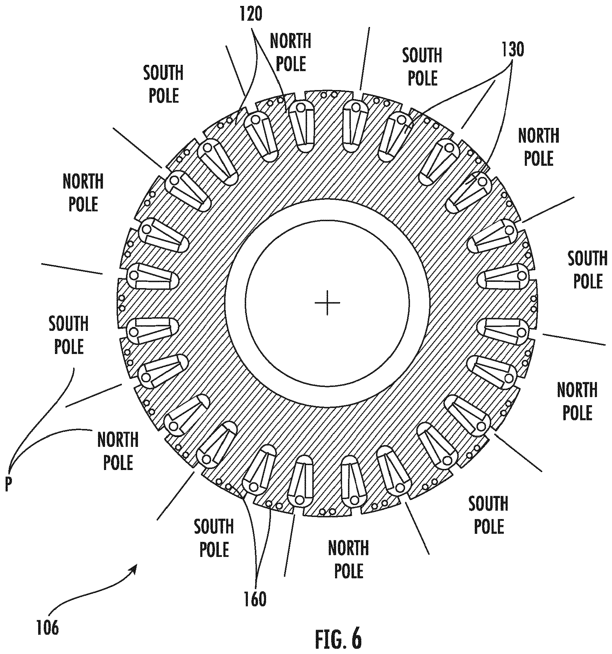

The core body 114 is formed from a ferromagnetic material 116 and includes a plurality of laminations 118 axially stacked along the rotation axis 112. A plurality of rotor teeth 120 are distributed circumferentially about the radially outer periphery of the core body 114 and are circumferentially spaced apart from one another by axial gaps 150. It is contemplated that the plurality of rotor teeth cooperate with the core winding 108 and a current flow I (shown in FIG. 3) provided to the core winding 108 to define distributed poles P (shown in FIG. 6) of the core 106. In this respect a first tooth 122 and a circumferentially adjacent second tooth 124 cooperate with the core winding 108 to define a first distributed pole P1 (shown in FIG. 3). A third tooth 126 and a fourth tooth 128 cooperate with the core winding 108 to define a distributed pole P2 (shown in FIG. 3).

The core winding 108 is fixed to the core body 114 and includes a plurality of coils 130. The plurality of coils 130 are connected electrically to one another in series with one another to cooperate with the plurality of teeth 120 to define the distributed poles P (shown in FIG. 6) of the core 106. In this respect the core winding 108 includes a first coil 132 and second coil 134 which cooperate with the first tooth 122 and the second tooth 124 to define the first distributed pole P1 (shown in FIG. 3), and a third coil 136 and a fourth coil 138 which cooperate with the third tooth 126 and the fourth tooth 128 to define the second distributed pole P2 (shown in FIG. 3). In certain embodiments the core 106 have no permanent magnets, the distributed poles P being defined only when the flows through the core winding 108. In accordance with certain embodiments, the core winding 108 can be a control winding arranged to cooperate with permanent magnets carried by the core body 114. It is also contemplated that core winding 108 can be a field winding or an excitation winding, as suitable for an intended application.

With reference to FIG. 3, a portion of the core 106 is shown. The first coil 132 is seated circumferentially about the first tooth 122 and the second tooth 124. The second coil 134 is seated about the second tooth 124 and not the first tooth 122. As a consequence, when the current flow I is provided to the core winding 108, the first tooth 122 and the second tooth 124 become magnetized with a common polarity to define the first distributed pole P1. Similarly, the third coil 136 is seated circumferentially about the third tooth 126 and the fourth tooth 128, and the fourth coil 138 is seated circumferentially about the fourth tooth 128 and not the third tooth 126. This causes the third tooth 126 and the fourth tooth 128 to become magnetized with a common polarity opposite that of the first distributed pole P1 to define the second distributed pole P2. It is contemplated that each of the plurality of coils 130 be connected electrically in series with one another such a current flow from a current source in electrical communication with the plurality of coils 130, e.g., a current source 140, define the distributed poles P distributed circumferentially about the periphery of the core 106. Further, although the first distributed pole P1 and the second distributed pole P2 are shown as having two (2) teeth and two (2) coils, it is to be understood and appreciated that the distributed poles P of the core 106 can have more than two (2) teeth and/or more two (2) coils, as suitable for an intended application.

As will be appreciated by those of skill in the art in view of the present disclosure, the shape and peak magnetic flux communication capability of the distributed poles P is a function of both circumferential span and the number of turns included in the coils seated on the plurality of teeth 120. According to a comparative example not belonging to the invention, as shown in FIG. 3 each of the plurality of the distributed poles P, e.g., the first distributed pole P1, include a plurality of teeth, e.g., the first tooth 122 and the second tooth 124, and a plurality of coils, e.g., a first coil 132 and a second coil 134, the plurality of coils having an equivalent number of turns. Defining the first distributed pole P1 with a plurality of teeth allows a pole arc 142 of the first distributed pole P1 to be larger than a circumferential span of 144 of the first tooth 122 and a circumferential span 146 of the second tooth 124, the first distributed pole spanning the first tooth 122 and the second tooth 123. This limits density of magnetic flux, improving efficiency of electric machines constructed with the core 106. Further, plurality of coils 130 can each be relatively small, limiting the load exerted by the plurality of coils 130 on the core body 114 during rotation - limiting stress and/or rendering the core 106 capable of supporting relatively high rotational speeds.

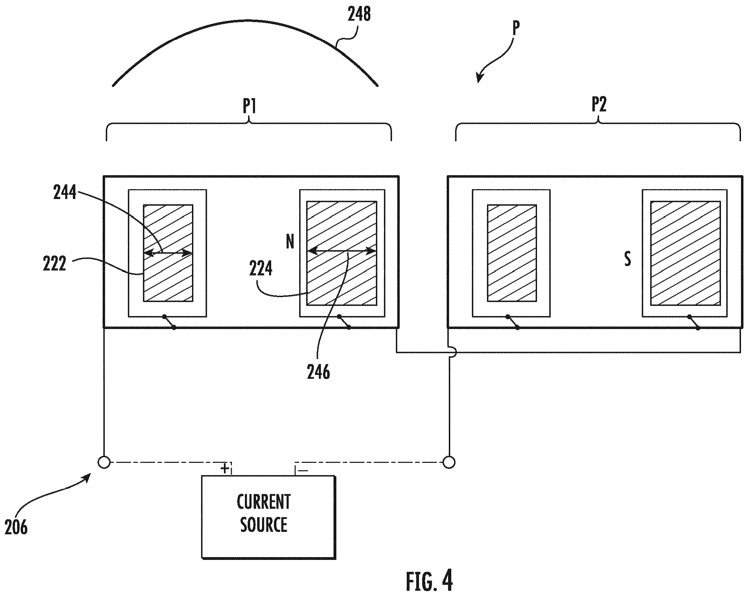

With reference to FIG. 4, a core 206 according to a further comparative example not belonging to the invention is shown. The core 206 is similar to the core 106 (shown in FIG. 2) and additionally includes a plurality of the distributed poles P each defined by rotor teeth with different circumferential span. In this respect the first distributed pole P1 is defined by a first tooth 222 and a second tooth 224. The first tooth 222 has a first circumferential span 244 and the second tooth has a second circumferential span 246, the second circumferential span 246 being greater than that of the first circumferential span 244. The differently sized circumferential spans of the first tooth 222 and the second tooth 224 impart shaping of a magnetic pole arc 248 defined by the first distributed pole P1 circumferentially spanning the first tooth 222 and the second tooth 224, which provides a parameter to define the shape of the sinusoidal voltage waveform 24 (shown in FIG. 1) provided to the electrical load 14 (shown in FIG. 1) connected to the electric machine 100 (shown in FIG. 1). Further, when the electric machine 100 is arranged to provide DC power to the DC electrical load 16 (shown in FIG. 1), the shape of the magnetic pole arc 248 can be selected to define the shape of the trapezoidal voltage waveform 26 (shown in FIG. 1) provided to the DC electrical load 16.

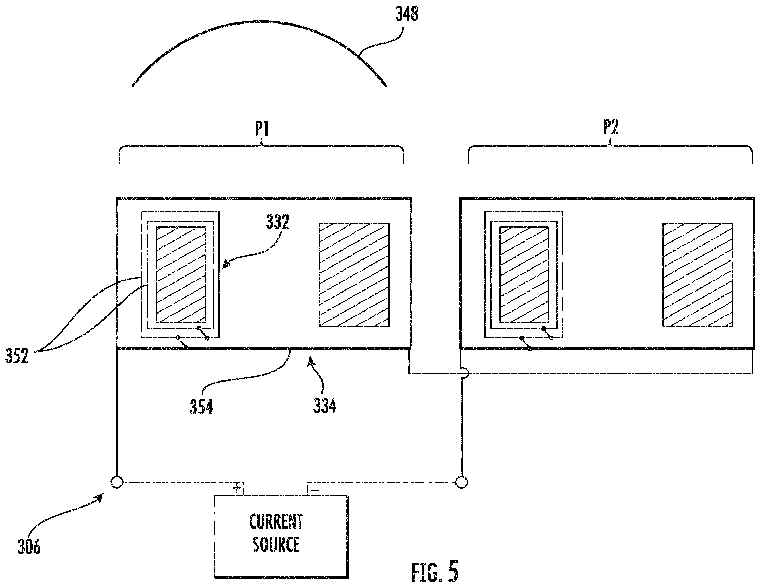

With reference to FIG. 5, a core 306 according to the invention is shown. The core 306 is similar to the core 106 (shown in FIG. 2) and additionally includes a plurality of the distributed poles P each defined by coils having different numbers of turns. In this respect the first distributed pole P1 is defined by a first coil 334 and a second coil 332. The second coil 332 has two (2) second coil turns 352 and the first coil 334 has one (1) first coil turn 354. The different number of first coil turns 354 of the first coil 334 and second coil turns 352 of the second coil 332 impart shaping of a magnetic pole arc 248 defined by the first distributed pole P1, which provides a parameter to define the shape of the sinusoidal voltage waveform 24 (shown in FIG. 1) provided to the electrical load 14 (shown in FIG. 1) connected to the electric machine 100 (shown in FIG. 1). Further, when the electric machine 100 is arranged to provide DC power to the DC electrical load 16 (shown in FIG. 1), the shape of the magnetic pole arc 248 can be selected to define the shape of the trapezoidal voltage waveform 26 (shown in FIG. 1) provided to the DC electrical load 16. Although coils of having two (2) and one (1) turn are shown in FIG. 5, it is to be understood and appreciated that embodiments of cores described herein can have distributed poles formed by coils having different numbers of turns than shown in FIG. 5 and remain within the scope of the present disclosure. 2. Embodiments of cores according to the invention have distributed poles with both teeth of different circumferential span and with coils having different numbers or turns.

With reference to FIG. 6, the core 106 is shown according to an embodiment. As shown in FIG. 6 the core 106 has twenty-four (24) teeth 120 and twenty-four (24) coils 130 fixed to the core body 114 to define twelve (12) distributed poles P. This allows the core 106 to serve as a spare (or upgrade) for generator-type electric machines having 12-pole rotors. As shown in FIG. 6, the core 106 also has a damper winding 160, which provides reduces (or eliminates entirely) the tendency of electrical load changes to change the rotational speed of the core 106.

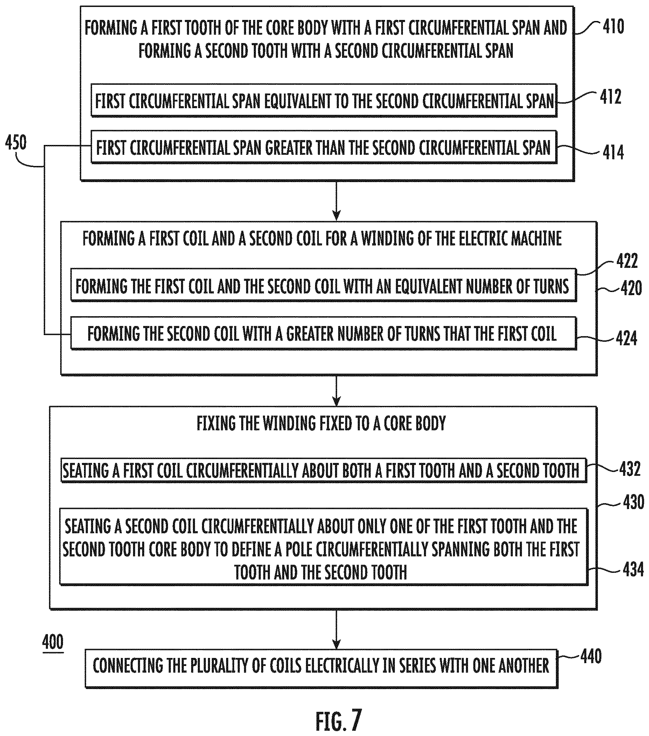

Referring now to FIG. 7, a method 400 of make a core for an electric machine, e.g., the core 106 (shown in FIG. 2) for the electric machine 100 (shown in FIG. 1), is shown. The method 400 include forming a first tooth and a second tooth o the core body, e.g., the first tooth 122 (shown in FIG. 2) and the second tooth 124 (shown in FIG. 2), as shown with box 410. The method 400 also includes forming a first coil and a second coil of a winding for the core of the electric machine, e.g., the first coil 132 (shown in FIG. 2) and the second coil 134 (shown in FIG. 2) of the core winding 108 (shown in FIG. 2), as shown with box 420. The method 400 additionally includes fixing the winding to the core body, as shown with box 430.

As shown with box 410, the circumferential span of the teeth forming the distributed poles of the core can be selected for shaping pole arc of the poles of the core. In a comparative example not belonging to the invention, a first circumferential span of the first tooth can be selected such that first circumferential span is equivalent to a second circumferential span of the second tooth, as shown with box 412. The first circumferential span can be selected such that the first circumferential of the first tooth is greater than the second circumferential span of the second tooth, as shown with box 414.

As shown with box 420, the number of turns of the coils defining the distributed poles of the core can be selected for shaping pole arc of the distributed poles of the core. In a comparative example not belonging to the invention, as shown with box 422, the first coil and the second coil can be formed with equivalent numbers of turns. According to the invention, the first coil and the second coil are formed with different numbers of turns, as shown with box 424. It is also contemplated that the each of distributed poles be defined with teeth having different circumferential span and with coils having different circumferential span, as shown with bracket 450.

As shown with boxes 432 and 434, the winding is fixed to the core body by seating the first coil about both the first tooth and the second tooth, and seating the second coil about only one of the first tooth and the second tooth. The distributed pole is thereafter defined by connecting the plurality of coils of the winding in series with one another and a current source, e.g., the current source 140 (shown in FIG. 3), as shown with box 440.

Poles in electric machines are commonly established by flowing electric current through a winding formed from singular coils wrapped about singular teeth. In embodiments described herein distributed poles are defined in an electric machine using two or more teeth and two or more coils for each distributed pole. According to the invention, the teeth defining the distributed poles of the electric machine have different circumferential span to cooperatively define the pole arc to accommodate an intended amount of magnetic flux communicated from the distributed pole and/or shape the magnetic pole. Further according to the invention, the coils defining the distributed poles of the electric machine have different numbers of turns to accommodate an intended amount of magnetic flux communicated from the distributed poles and/or shape the magnetic pole. It is contemplated that distributed poles provide relatively large pole arc, improve manufacturability/windability, and/or allow the electric machine to support higher rotational speed due to the relatively wedges and coils employed in the electric machine. In generator-type electric machines, the shaping provided by the distributed magnetic poles can in turn improve the shape of the voltage waveform provided by the generator, e.g., the second order fit of a sinusoidal voltage waveform provided to AC electrical loads or flatness/slope of a trapezoidal voltage waveform provided to DC electrical loads.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined in the independent claims. In addition, many modifications may be made to adapt a particular situation or material to the teachings of the present disclosure without departing from the scope of the present invention as defined in the independent claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An electric machine comprising:
a core (106) for the electric machine, the core (106) being a rotor seated
on a shaft (110), and the core (106) comprising:
a core body (114) arranged along a rotation axis (112) of the shaft (110), the core body having a plurality of teeth distributed about the radial outer periphery of the core body (114) including at least a first tooth (122) and a second tooth (124) circumferentially spaced from one another about the rotation axis; and
a core winding (108) fixed to the core body and having a plurality of coils (130) connected electrically in series with one another,
a first one (334) of the plurality of coils seated circumferentially about both the first tooth (122) and the second tooth (124), and a second one (332) of the plurality of coils is seated about only one of the first tooth (122) and the second tooth (124), and the first and second coils (332, 334) defining a distributed pole (P1) circumferentially spanning both the first tooth (122) and the second tooth (124); and
a current source in electrical communication with the core winding (108), wherein the core winding (108) defines a plurality of distributed poles (P) arranged circumferentially about the rotation axis (112);
wherein for shaping a pole arc (348) of the distributed poles (P) of the core (106): the first tooth (122) has a first circumferential span (144),
the second tooth (124) has a second circumferential span (146), the second circumferential span (146) is greater than the first circumferential span (144), the first coil (334) 11 comprises a plurality of first coil turns, the second coil (332) comprises a plurality of second coil turns, and the plurality of second coil turns differs from the plurality of first coil turns;
wherein the winding and the core body cooperatively define twelve distributed poles, wherein the core body has twenty-four teeth, and wherein the winding has twenty-four coils; and
the electric machine further comprising a stator (102) with a stator winding (104), wherein the stator (102) extends about the rotation axis and the core (106) is supported for rotation about the rotation axis (112) relative to the stator (102).

2. The electric machine as recited in claim 1, wherein each of the plurality of distributed poles of the core is defined by two or more teeth of the core, or
wherein each of the plurality of distributed poles is defined by two or more coils of the winding.

3. The electric machine as recited in any preceding claim, wherein in the core comprises a plurality of laminations axially stacked along the rotation axis, the core body seated on the shaft.

4. The electric machine as recited in any preceding claim, wherein the winding is one of a field winding, an excitation winding, or a control winding, and/or
further comprising a damper winding seated in the core body, and/or
wherein the core has no permanent magnets fixed to the core body.

5. The electric machine as recited in claim 1, wherein the winding and the rotor cooperate to generate a sinusoidal voltage waveform for an alternating current electrical load connected to the stator winding.

6. The electric machine as recited in claim 1, wherein the winding and the rotor cooperate to generate a trapezoidal voltage waveform for a direct current electrical load connected to the stator winding.

7. The electric machine as recited in claims 1 and 5 to 6, further comprising one of an alternating current electrical load and a direct current electrical load connected to the stator winding.

8. A method of making the core for the electric machine of claim 1, comprising:
at the core body (114) arranged along the rotation axis (112), the core body having the plurality of teeth including at least the first tooth (122) and the second tooth (124) circumferentially spaced from one another about the rotation axis,
fixing the winding fixed to the core body, wherein fixing the winding to the core body includes seating the first one (334) of the plurality of coils circumferentially about both the first tooth (122) and the second tooth (124) and seating the second one (332) of the plurality of coils about only one of the first tooth and the second tooth to define a distributed pole (P1) circumferentially spanning both the first tooth (122) and the second tooth (124),
connecting the plurality of coils electrically in series with one another; and
shaping a pole arc (348) of the distributed poles of the core by: forming the first tooth (122) with the first circumferential span (144) and the second tooth (124) with the second circumferential span (146) greater than the first circumferential span (144); and forming the second coil (332) with a greater number of turns than the first coil (334).

## Patentansprüche

1. Elektrische Maschine, umfassend:
einen Kern (106) für die elektrische Maschine, wobei der Kern (106) ein auf eine Welle (110) eingepasster Rotor ist und der Kern (106) Folgendes umfasst:
einen Kernkörper (114), der entlang einer Rotationsachse (112) der Welle (110) angeordnet ist, wobei der Kernkörper eine Vielzahl von Zähnen aufweist, die um den radialen Außenumfang des Kernkörpers (114) herum verteilt ist, einschließlich mindestens eines ersten Zahns (122) und eines zweiten Zahns (124), die in Umfangsrichtung um die Rotationsachse herum voneinander beabstandet sind; und
eine an dem Kernkörper befestigte Kernspule (108), die eine Vielzahl von Wicklungen (130) aufweist, die elektrisch in Reihe miteinander verbunden sind,
eine erste (334) der Vielzahl von Wicklungen, die in Umfangsrichtung um sowohl den ersten Zahn (122) als auch den zweiten Zahn (124) eingepasst ist, und eine zweite (332) der Vielzahl von Wicklungen, die nur um einen von dem ersten Zahn (122) und dem zweiten Zahn (124) eingepasst ist, und wobei die erste und zweite Wicklung (332, 334) einen verteilten Pol (P1) definieren, der in Umfangsrichtung sowohl den ersten Zahn (122) als auch den zweiten Zahn (124) überspannt; und
eine Stromquelle in elektrischer Verbindung mit der Kernspule (108), wobei die Kernspule (108) eine Vielzahl von verteilten Polen (P) definiert, die kreisförmig um die Rotationsachse (112) herum angeordnet ist;
wobei zum Formen eines Polbogens (348) der verteilten Pole (P) des Kerns (106): der erste Zahn (122) eine erste Umfangsspanne (144) aufweist, der zweite Zahn (124) eine zweite Umfangsspanne (146) aufweist, die zweite Umfangsspanne (146) größer ist als die erste Umfangsspanne (144), die erste Wicklung (334) eine Vielzahl von ersten Wicklungswindungen umfasst, die zweite Wicklung (332) eine Vielzahl von zweiten Wicklungswindungen umfasst und sich die Vielzahl von zweiten Wicklungswindungen von der Vielzahl von ersten Wicklungswindungen unterscheidet;
wobei die Spule und der Kernkörper zusammen zwölf verteilte Pole definieren, wobei der Kernkörper vierundzwanzig Zähne aufweist und wobei die Spule vierundzwanzig Wicklungen aufweist; und
wobei die elektrische Maschine ferner einen Stator (102) mit einer Statorspule (104) umfasst, wobei sich der Stator (102) um die Rotationsachse herum erstreckt und der Kern (106) für eine Rotation um die Rotationsachse (112) herum relativ zu dem Stator (102) gestützt ist.

2. Elektrische Maschine nach Anspruch 1, wobei jeder der Vielzahl von verteilten Polen des Kerns durch zwei oder mehr Zähne des Kerns definiert ist oder
wobei jeder der Vielzahl von verteilten Polen durch zwei oder mehr Wicklungen der Spule definiert ist.

3. Elektrische Maschine nach einem der vorhergehenden Ansprüche, wobei der Kern eine Vielzahl von axial entlang der Rotationsachse gestapelten Laminierungen umfasst, wobei der Kernkörper auf der Welle sitzt.

4. Elektrische Maschine nach einem der vorhergehenden Ansprüche, wobei die Spule eine Feldspule, eine Erregerspule oder eine Steuerspule ist und/oder
ferner umfassend eine in dem Kernkörper eingepasste Dämpferspule und/oder
wobei der Kern keine an dem Kernkörper befestigte Permanentmagnete aufweist.

5. Elektrische Maschine nach Anspruch 1, wobei die Spule und der Rotor zum Erzeugen einer sinusförmigen Spannungswellenform für eine mit der Statorspule verbundene elektrische Wechselstromlast zusammenwirken.

6. Elektrische Maschine nach Anspruch 1, wobei die Spule und der Rotor zum Erzeugen einer trapezförmigen Spannungswellenform für eine mit der Statorspule verbundene elektrische Gleichstromlast zusammenwirken.

7. Elektrische Maschine nach den Ansprüchen 1 und 5 bis 6, ferner umfassend eine elektrische Wechselstromlast oder eine elektrische Gleichstromlast, die mit der Statorwicklung verbunden ist.

8. Verfahren zum Herstellen des Kerns für die elektrische Maschine nach Anspruch 1, umfassend:
an dem Kernkörper (114), der entlang der Rotationsachse (112) angeordnet ist, wobei der Kernkörper die Vielzahl von Zähnen aufweist, einschließlich mindestens eines ersten Zahns (122) und eines zweiten Zahns (124), die in Umfangsrichtung um die Rotationsachse herum voneinander beabstandet sind,
Befestigen der an dem Kernkörper befestigten Spule, wobei das Befestigen der Spule an dem Kernkörper Einpassen der ersten (334) der Vielzahl von Wicklungen in Umfangsrichtung um sowohl den ersten Zahn (122) als auch den zweiten Zahn (124) und Einpassen der zweiten (332) der Vielzahl von Wicklungen um nur einen von dem ersten Zahn und dem zweiten Zahn beinhaltet, um einen verteilten Pol (P1) zu definieren, der in Umfangsrichtung sowohl den ersten Zahn (122) als auch den zweiten Zahn (124) überspannt,
elektrisches Verbinden der Vielzahl von Wicklungen in Reihe miteinander; und
Formen eines Polbogens (348) der verteilten Pole des Kerns durch: Bilden des ersten Zahns (122) mit der ersten Umfangsspanne (144) und des zweiten Zahns (124) mit der zweiten Umfangsspanne (146), die größer ist als die erste Umfangsspanne (144); und Bilden der zweiten Wicklung (332) mit einer größeren Anzahl von Windungen als die erste Wicklung (334) .

## Revendications

1. Machine électrique comprenant :
un noyau (106) pour la machine électrique, le noyau (106) étant un rotor placé sur un arbre (110), et le noyau (106) comprenant :
un corps de noyau (114) agencé le long d'un axe de rotation (112) de l'arbre (110), le corps de noyau ayant une pluralité de dents distribuées autour de la périphérie externe radiale du corps de noyau (114) comportant au moins une première dent (122) et une seconde dent (124) espacées circonférentiellement l'une de l'autre autour de l'axe de rotation ; et
un enroulement de noyau (108) fixé au corps de noyau et ayant une pluralité de bobines (130) connectées électriquement en série les unes avec les autres,
une première (334) de la pluralité de bobines placée circonférentiellement autour de la première dent (122) et de la seconde dent (124), et une seconde (332) de la pluralité de bobines est placée autour d'une seule de la première dent (122) et de la seconde dent (124), et les première et seconde bobines (332, 334) définissant un pôle distribué (P1) s'étendant circonférentiellement à la fois sur la première dent (122) et sur la seconde dent (124) ; et
une source de courant en communication électrique avec l'enroulement de noyau (108), dans laquelle l'enroulement de noyau (108) définit une pluralité de pôles distribués (P) agencés circonférentiellement autour de l'axe de rotation (112) ;
dans laquelle pour façonner un arc polaire (348) des pôles répartis (P) du noyau (106) : la première dent (122) a une première envergure circonférentielle (144), la seconde dent (124) a une seconde envergure circonférentielle (146), la seconde envergure circonférentielle (146) est supérieure à la première envergure circonférentielle (144), la première bobine (334) comprend une pluralité de premières spires de bobine, la seconde bobine (332) comprend une pluralité de secondes spires de bobine, et la pluralité de secondes spires de bobine diffère de la pluralité de premières spires de bobine ;
dans laquelle l'enroulement et le corps de noyau définissent en coopération douze pôles distribués, dans laquelle le corps de noyau a vingt-quatre dents, et dans laquelle l'enroulement a vingt-quatre bobines ; et
la machine électrique comprenant en outre un stator (102) avec un enroulement de stator (104), dans laquelle le stator (102) s'étend autour de l'axe de rotation et le noyau (106) est supporté pour une rotation autour de l'axe de rotation (112) par rapport au stator (102).

2. Machine électrique selon la revendication 1, dans laquelle chacun de la pluralité de pôles distribués du noyau est défini par deux dents ou plus du noyau, ou
dans laquelle chacun de la pluralité de pôles distribués est défini par deux bobines ou plus de l'enroulement.

3. Machine électrique selon une quelconque revendication précédente, dans laquelle le noyau comprend une pluralité de tôles empilées axialement le long de l'axe de rotation, le corps de noyau étant placé sur l'arbre.

4. Machine électrique selon une quelconque revendication précédente, dans laquelle l'enroulement est l'un parmi un enroulement de champ, un enroulement d'excitation ou un enroulement de commande, et/ou
comprenant en outre un enroulement d'amortisseur placé dans le corps de noyau, et/ou
dans laquelle le noyau n'a aucun aimant permanent fixé au corps de noyau.

5. Machine électrique selon la revendication 1, dans laquelle l'enroulement et le rotor coopèrent pour générer une forme d'onde de tension sinusoïdale pour une charge électrique à courant alternatif connectée à l'enroulement de stator.

6. Machine électrique selon la revendication 1, dans laquelle l'enroulement et le rotor coopèrent pour générer une forme d'onde de tension trapézoïdale pour une charge électrique à courant continu connectée à l'enroulement de stator.

7. Machine électrique selon les revendications 1 et 5 à 6, comprenant en outre l'une parmi une charge électrique à courant alternatif et une charge électrique à courant continu connectée à l'enroulement de stator.

8. Procédé de réalisation du noyau pour la machine électrique selon la revendication 1, comprenant :
au niveau du corps de noyau (114) agencé le long de l'axe de rotation (112), le corps de noyau ayant la pluralité de dents comportant au moins la première dent (122) et la seconde dent (124) espacées circonférentiellement l'une de l'autre autour de l'axe de rotation,
la fixation de l'enroulement fixé au corps de noyau, dans lequel la fixation de l'enroulement au corps de noyau comporte le placement de la première (334) de la pluralité de bobines circonférentiellement autour de la première dent (122) et de la seconde dent (124) et le placement de la seconde (332) de la pluralité de bobines autour d'une seule parmi la première dent et la seconde dent pour définir un pôle distribué (P1) s'étendant circonférentiellement à la fois sur la première dent (122) et sur la seconde dent (124),
la connexion électrique de la pluralité de bobines en série les unes aux autres ; et
le façonnage d'un arc polaire (348) des pôles distribués du noyau par : la formation de la première dent (122) avec la première envergure circonférentielle (144) et de la seconde dent (124) avec la seconde envergure circonférentielle (146) supérieure à la première envergure circonférentielle (144) ; et
la formation de la seconde bobine (332) avec un nombre de spires supérieur à celui de la première bobine (334).
